# EUROPEAN PATENT APPLICATION

(11) **EP 2 548 748 A2**
(43) Date of publication of application: **23.01.2013**
(21) Application number: 12176487.2
(22) Date of filing: 16.07.2012
(51) Int. Cl.: B60C 23/04, G07C 9/00

(54) **Multifunction receiver**

(30) Priority: 19.07.2011 JP 2011158488
(71) Applicant: KABUSHIKI KAISHA TOKAI RIKA DENKI SEISAKUSHO, Niwa-gun, Aichi 480-0195 (JP)
(72) Inventor: Shibagaki, Yuuji, Niwa-gun,, Aichi 480-0195 (JP)
(74) Representative: TBK

(57) **Abstract**

A vehicle (1) includes a multifunction receiver (16) that receives signals from a wireless key system (3) and a tire pressure monitoring system (9). When a power supply of the vehicle (1) is activated and the vehicle (1) is traveling or stopped, the multifunction receiver (16) is set to receive signals from the tire pressure monitoring system (9). When the power supply of the vehicle (1) is deactivated, the multifunction receiver (16) is set to receive signals from the wireless key system (3) regardless of the travel state of the vehicle (1).

## Description

The present invention relates to a multifunction receiver capable of receiving radio waves from an electronic key system and a tire pressure monitoring system.

A vehicle may include an electronic key system that includes an electronic key. The electronic key transmits an ID signal through wireless communication, and the vehicle verifies the electronic key based on the ID signal. A vehicle may also include a tire pressure monitoring system that monitors the air pressure of each tire. The tire pressure monitoring system includes a tire communicator attached to each tire. The tire communicator detects the air pressure of the corresponding tire and transmits a tire pressure signal to the vehicle through wireless communication. The vehicle checks the tire pressure based on the tire pressure signal received from the tire communicator. When locating a low-pressure tire, the vehicle warns the driver of the low pressure.

In this manner, when the electronic key system and the tire pressure monitoring system are both installed in the same vehicle, a multifunction receiver may be used to reduce the number of components. The multifunction receiver functions in a key mode for receiving signals from the electronic key system and a tire pressure monitoring mode for receiving signals from the tire pressure monitoring system (refer to Japanese Patent No. 4407583). In the technology described in Japanese Patent No. 4407583, when an ignition switch of the vehicle is off, the multifunction receiver is set in the key mode and receives signals from the electronic key system. When the ignition switch is on, the multifunction receiver is set in the tire pressure monitoring mode and receives signals from the tire monitoring system.

A vehicle may include an engine starter. In such a case, with the multifunction receiver of Japanese Patent No. 4407583, as soon as an engine starter starts the engine, the ignition switch goes on. This switches the multifunction receiver to the tire pressure monitoring mode. Thus, the user cannot unlock the vehicle doors with the electronic key system to enter the vehicle because the multifunction receiver has been switched to the tire pressure monitoring mode. In this state, wireless verification cannot be performed, and the vehicle doors cannot be unlocked with the electronic key.

Japanese Laid-Open Patent Publication No. 2008-132911 describes a multifunction receiver that switches signal reception modes in accordance with the speed of the vehicle. When the vehicle speed is less than a predetermined value, the multifunction receiver is set in the key mode to receive signals from an electronic key system. When the vehicle speed is greater than or equal to the predetermined value, the multifunction receiver is set in the tire pressure monitoring mode to receive signals from a tire pressure monitoring system. In this case, however, for example, when the vehicle stops at a traffic signal and the vehicle speed becomes "0", the multifunction receiver is switched to the electronic key mode. Thus, the tire pressure cannot constantly be monitored when the vehicle is being driven.

One aspect of the present invention is a multifunction receiver shared by an electronic key system, which verifies authenticity of an electronic key of a vehicle, and a tire pressure monitoring system, which monitors air pressure of a tire of the vehicle. The multifunction receiver includes a power supply state detection unit that detects whether or not a power supply of the vehicle is activated. A travel state detection unit detects whether or not the vehicle is traveling. A signal reception mode setting unit sets a signal reception mode of the multifunction receiver to a tire pressure monitoring mode for receiving a signal from the tire pressure monitoring system and a key mode for receiving a signal from the electronic key system. The reception mode setting unit sets the multifunction receiver to the tire pressure monitoring mode when the power supply state detection unit detects that the power supply of the vehicle is activated and the travel state detection unit detects that the vehicle is traveling. The reception mode setting unit sets the multifunction receiver to the key mode when the power supply state detection unit detects that the power supply of the vehicle is deactivated.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a schematic block diagram of a wireless key system and a tire pressure monitoring system;
Fig. 2A is a time chart showing the operation of a multifunction receiver according to one embodiment of the present invention in a key mode;
Fig. 2B is a time chart showing the operation of the multifunction receiver in a tire pressure monitoring mode;
Fig. 3 is a schematic block diagram of the multifunction receiver when the multifunction receiver is set in the tire pressure monitoring mode; and
Fig. 4 is a schematic diagram of the multifunction receiver when the multifunction receiver is set in the key mode.

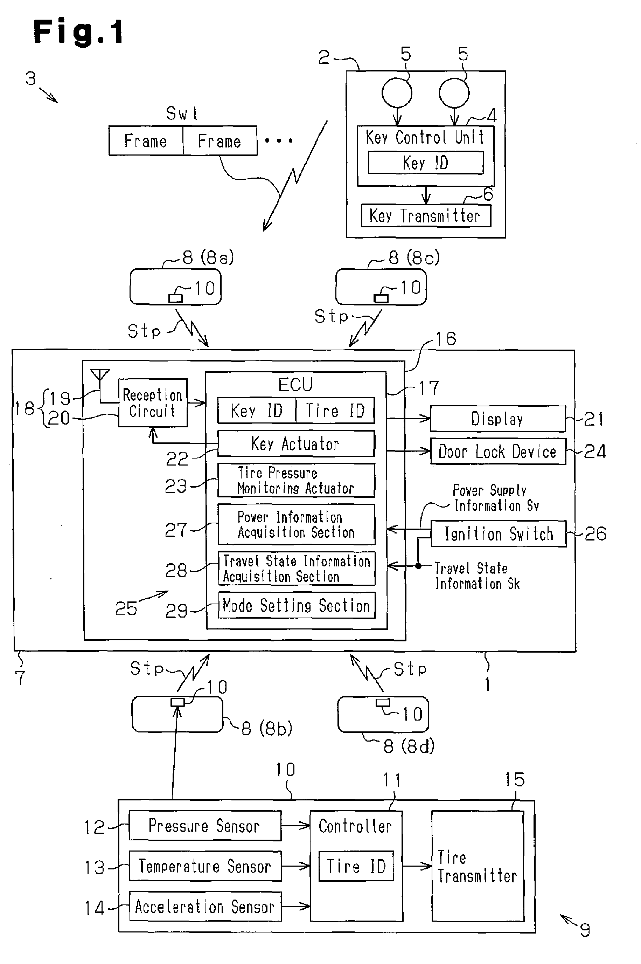

A multifunction receiver according to one embodiment of the present invention will now be described with reference to Figs. 1 to 4.

Referring to Fig. 1, a vehicle 1 includes a wireless key system 3, which operates the vehicle 1 based on a wireless signal Sw1 transmitted through wireless communication from a wireless key 2. When communication is established with the wireless key 2, the wireless key system 3 performs ID verification (wireless verification) with the vehicle 1 and the wireless key 2. When wireless verification is accomplished, the wireless key system 3 has the vehicle 1 lock or unlock the vehicle doors. The wireless key 2 corresponds to an electronic key, the wireless key system 3 corresponds to an electronic key system, and the wireless signal Swl corresponds to an ID signal.

The wireless key 2 includes a key control unit 4, a plurality of buttons 5, and a key transmitter 6. The key control unit 4 manages communication operations of the wireless key 2. The key control unit 4 includes a memory (not shown), which registers a key ID of the wireless key 2. The buttons 5 are actuated to remotely control the locking and unlocking of the vehicle doors. The key transmitter 6 is connected to the key control unit 4 and transmits radio waves on the ultrahigh frequency (UHF) band. When one of the buttons 5 is actuated, the key control unit 4 transmits a wireless signal Swl, which includes the registered key ID and a function code corresponding to the actuated button 5, on the UHF band from the key transmitter 6.

The vehicle 1 includes tires 8 (8a to 8d), which are mounted on a vehicle body 7, and a tire pressure monitoring system 9 that monitors the air pressure of each of the tires 8a to 8d. The tire pressure monitoring system 9 includes a tire communicator 10 attached to each of the tires 8a to 8d. The tire communicator 10 detects the air pressure of the corresponding one of the tires 8a to 8d and transmits a tire pressure signal Stp, which indicates the detection, to the vehicle body 7. The vehicle body 7 determines the tire pressure from the tire pressure signal Stp and notifies the driver of the determination. The tire communicator 10 corresponds to a tire pressure detection unit.

Each tire communicator 10 includes a controller 11, a pressure sensor 12, a temperature sensor 13, an acceleration sensor 14, and a tire transmitter 15. The controller 11 includes a memory (not shown), which registers a tire ID of the corresponding one of the tires 8a to 8d. The pressure sensor 12, which is connected to the controller 11, detects the air pressure of the corresponding one of the tires 8a to 8d. The acceleration sensor 14, which is connected to the controller 11, detects rotation of the corresponding one of the tires 8a to 8d. The controller 11 manages the pressure sensor 12, the temperature sensor 13, the acceleration sensor 14, and the tire transmitter 15. The each of sensors 12-14 sends detection signals to the controller 11. The tire transmitter 15, which is connected to the controller 11, transmits radio waves on the UHF band.

The tire pressure monitoring system 9 of the present example 9 is of a self-excited type, and each tire communicator 10 transmits a tire pressure signal Stp in predetermined intervals. The tire pressure signal Stp includes tire pressure data, tire temperature data, the tire ID, and the like. The tire communicator 10 varies the transmission interval of the tire pressure signal Stp in accordance with an acceleration signal from the acceleration sensor 14. For example, when the vehicle 1 is moving, the tire communicator 10 transmits the tire pressure signal Stp once every minute. When the vehicle 1 is not moving and stopped, the tire communicator 10 transmits the tire pressure signal Stp once every five minutes.

The vehicle body 7 includes a multifunction receiver 16 and a display 21. The multifunction receiver 16 can receive radio waves from the wireless key 2 and the tire communicators 10. The display 21, which is connected to the multifunction receiver 16, is arranged in an instrument panel or the like. The multifunction receiver 16 of the present example is shared by the wireless key system 3 and the tire pressure monitoring system 9.

The multifunction receiver 16 includes an electronic control unit (ECU) 17, which controls the operation of the multifunction receiver 16, and a reception unit 18, which can receive UHF radio waves. The ECU 17 includes a memory (not shown) that registers the key ID and tire IDs. The reception unit 18 includes an antenna 19, which receives radio waves on the UHF band, and a reception circuit 20, which demodulates and amplifies the received radio waves. The ECU 17 switches signal reception modes of the multifunction receiver 16. The ECU 17 corresponds to a control unit.

In the present example, the wireless key system 3 and the tire pressure monitoring system 9 uses radio waves having the same frequency (signal reception frequency). Thus, the reception unit 18 of the present example includes the reception circuit 20 (reception IC) that only receives radio waves having the signal reception frequency.

The ECU 17 includes a key actuator 22 and a tire pressure monitoring actuator 23. The key actuator 22 sets the multifunction receiver 16 in a key mode for receiving signals from the wireless key system 3. The tire pressure monitoring actuator 23 sets the multifunction receiver 16 in a tire pressure monitoring mode for receiving signals from the tire pressure monitoring system 9. The key actuator 22 and the tire pressure monitoring actuator 23 are functional sections implemented when a central processing unit (CPU) in the ECU 17 executes corresponding programs.

When the reception unit 18 receives the wireless signal Sw1, the key actuator 22 verifies the key ID included in the wireless signal Sw1 with the key ID registered in the multifunction receiver 16 to perform wireless verification. When determining that wireless verification has been actuator, the key actuator 22 locks or unlocks the vehicle doors with a door lock device 24.

When the reception unit 18 receives the tire pressure signal Stp, the tire pressure monitoring actuator 23 verifies the tire ID included in the tire pressure signal Stp with the tire IDs registered in the multifunction receiver 16 to perform tire ID verification. When determining that tire ID verification has been successful, the tire pressure monitoring actuator 23 checks the tire pressure data included in the tire pressure signal Stp to determine whether or not the corresponding tire 8 is in a low pressure state. When determining that the tire pressure is low, the tire pressure monitoring actuator 23 indicates a low pressure warning on the display 21.

When the tire temperature rises, the tire pressure increases. Thus, to set the optimal low pressure threshold, the tire pressure monitoring actuator 23 refers to the tire temperature data included in the tire pressure signal Stp. The tire pressure monitoring actuator 23 compares the tire pressure with the low pressure threshold, which is set in accordance with the tire temperature. When the tire pressure is less than the low pressure threshold, the tire pressure monitoring actuator 23 shows the location of the low pressure tire on the display 21.

The vehicle 1 includes an ignition switch 26 which activates a power supply of the vehicle 1 when actuated by a user. The user selectively switches the ignition switch 26 to an ignition (IG) OFF position, an accessory (ACC) ON position, an IG ON position, and an engine start position. The ignition switch 26 provides the ECU 17 with power information Sv in accordance with its position. More specifically, the ignition switch 26 provides the ECU 17 with an IG OFF signal Sof when switched to the IG OFF position. When switched to the ACC ON position, the ignition switch 26 provides the ECU 17 with an ACC ON signal Sac. When switched to the IG ON position or engine start position, the ignition switch 26 provides the ECU 17 with an IG ON signal Son. The ECU 17 includes a power information acquisition section 27 that acquires power supply information Sv from the ignition switch 26. The power information acquisition section 27 corresponds to a power supply state detection unit.

The multifunction receiver 16 of the present example includes a mode switching system 25 that switches the signal reception mode of the multifunction receiver 16 based on the power supply activation state and travel state of the vehicle 1. When the power supply of the vehicle 1 is activated and the vehicle 1 is traveling or stopped, the mode switching system 25 of the present example sets the multifunction receiver 16 to the tire pressure monitoring mode to receive signals from the tire pressure monitoring system 9. When the power supply of the vehicle 1 is deactivated, the mode switching system 25 sets the multifunction receiver 16 to the key mode to receive signals from the wireless key system 3 regardless of whether or not the vehicle 1 is traveling. Here, the term "traveling" refers to a state in which the power supply of the vehicle 1 is activated and the vehicle 1 is traveling. Further, "stopped" refers to a state in which the power supply of the vehicle 1 is activated and the engine is running but the vehicle 1 is stopped.

The ECU 17 also includes a travel state information acquisition section 28 that obtains travel state information Sk indicating the travel state of the vehicle 1. The travel state information Sk indicates whether the vehicle 1 is traveling, stopped, or parked. As the travel state information Sk, the travel state information acquisition section 28 acquires vehicle speed information Sk1 or engine speed information Sk2 from a meter ECU or the like and a starter ON signal Sst from the ignition switch 26. The vehicle speed information Sk1 indicates the traveling speed of the vehicle 1. The engine speed information Sk2 indicates the engine speed of the vehicle 1. The travel state information acquisition section 28 corresponds to a travel state detection unit.

Further, the ECU 17 includes a mode setting section 29 that sets the signal reception mode of the multifunction receiver 16 based on the power supply information Sv and travel state information Sk. When determining that the power supply of the vehicle 1 is activated by the ignition switch 26 and the vehicle 1 is traveling or stopped, the mode setting section 29 activates the tire pressure monitoring actuator 23 and sets the multifunction receiver 16 to the tire pressure monitoring mode to receive signals from the tire pressure monitoring system 9. When the power supply of the vehicle 1 is inactivated by the ignition switch 26, the mode setting section 29 activates the key actuator 22 and sets the multifunction receiver 16 to the key mode to receive signals from the wireless key system 3 regardless of whether or not the vehicle 1 is traveling. The mode setting section 29 corresponds to a signal reception mode setting unit.

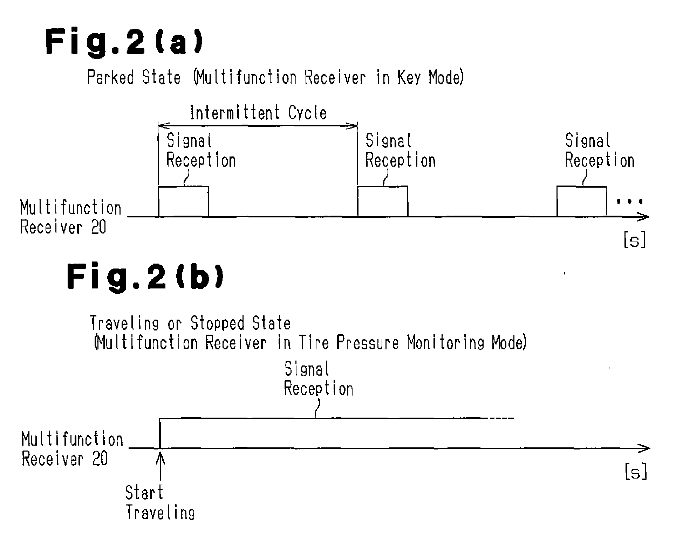

When the user enters or leaves the vehicle 1, the wireless signal Sw1 is transmitted from the wireless key 2. Thus, referring to Fig. 2(a), to detect the wireless signal Sw1 when the vehicle is in a parked state, the key actuator 22 intermittently actuates the reception unit 18. The intermittent actuation of the reception unit 18 suppresses dark current in the vehicle 1. Further, when the vehicle 1 is in a parked state, intermittent actuation of the reception unit 18 would not cause any problem since there is no need to obtain the air pressure of the tires 8 within a predetermined period. Here, "parked" refers to a state in which the power supply of the vehicle 1 is deactivated and the engine is stopped.

There is a regulation that requires the tire pressure of every tire to be obtained within a predetermined period from when the vehicle 1 starts to travel. Thus, referring to Fig. 2(b), when the vehicle 1 is traveling or stopped, the tire pressure monitoring actuator 23 constantly activates the reception unit 18 so that the tire pressure signal Stp can constantly be received.

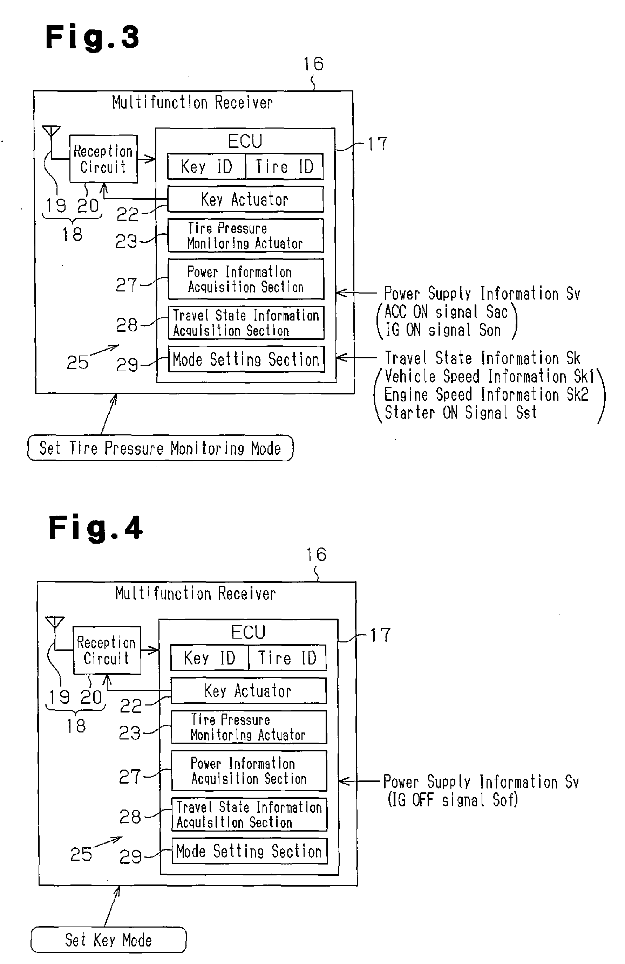

The operation of the mode switching system 25 in the present example will now be described with reference to Figs. 3 and 4.

Referring to Fig. 3, when the ignition switch 26 is switched to the ACC ON position, the ignition switch 26 provides the power information acquisition section 27 with the ACC ON signal Sac. Further, when the ignition switch 26 is switched to the IG ON position, the ignition switch 26 provides the power information acquisition section 27 with the IG ON signal Son. In this manner, when switched to a position that activates the power supply of the vehicle 1, the ignition switch 26 provides the power information acquisition section 27 with a signal indicating that the power supply of the vehicle 1 has been activated.

When the ignition switch 26 is switched to the ACC ON position or the IG ON position, the travel state information acquisition section 28 is activated and acquires the travel state information Sk from the meter ECU or the ignition switch 26. The travel state information Sk includes the vehicle speed information Sk1 and the engine speed information Sk2 from the meter ECU or the like and the starter ON signal Sst from the ignition switch 26.

The mode setting section 29 sets the mode of the multifunction receiver 16 in accordance with the acquired power supply information Sv and the travel state information Sk. Based on the acquired power supply information Sv, the mode setting section 29 determines whether or not the power supply of the vehicle 1 is activated. More specifically, the mode setting section 29 determines that the power supply of the vehicle 1 is activated when one of the ACC ON signal Sac and the IG ON signal Son is received. Further, based on the acquired travel state information Sk, the mode setting section 29 determines whether or not the vehicle 1 is traveling or stopping. More specifically, when the vehicle speed is greater than or equal to a threshold, the engine speed is greater than or equal to a threshold, or the mode setting section 29 is provided with the starter ON signal Sst, the mode setting section 29 determines that the vehicle 1 is traveling or stopped.

When determining that the power supply of the vehicle 1 is activated and that the vehicle 1 is traveling or stopped, the mode setting section 29 activates the tire pressure monitoring actuator 23 and sets the multifunction receiver 16 to the tire pressure monitoring mode to receive signals from the tire pressure monitoring system 9. This allows the multifunction receiver 16 to receive the tire pressure signal Stp from each tire communicator 10 and perform tire pressure monitoring.

Referring to Fig. 4, when the mode setting section 29 acquires the IG OFF signal Sof from the ignition switch 26, the mode setting section 29 activates the key actuator 22 regardless of whether the vehicle 1 is traveling and sets the multifunction receiver 16 to the key mode to receive signals from the wireless key system 3. In this manner, the determination for setting the multifunction receiver 16 to the key mode is based solely on the power supply information Sv and not the travel state information. This allows the multifunction receiver 16 to receive the wireless signal Sw1 from the wireless key 2 and perform wireless verification.

As described above, in the present example, when the power supply of the vehicle 1 is activated and, at the same time, the vehicle 1 is traveling or stopped, the multifunction receiver 16 is set to the tire pressure monitoring mode to receive signals from the tire pressure monitoring system 9. When the power supply of the vehicle 1 is deactivated, the multifunction receiver 16 is set to the key mode to receive signals from the wireless key system 3 regardless of whether the vehicle 1 is traveling or stopped. In this manner, the determination for setting the multifunction receiver 16 to the tire pressure monitoring mode is based on the activation state of the power supply of the vehicle 1 and the traveling state of the vehicle 1. The determination for setting the multifunction receiver 16 to the key mode is based solely on the activation state of the power supply of the vehicle 1.

The vehicle 1 may include a remote control engine starter. In such a case, when the engine is started by the remote engine starter, the vehicle 1 does not start traveling. Thus, the multifunction receiver 16 is maintained in the key mode. This allows the user to unlock the vehicle doors with the wireless key 2 when entering the vehicle 1 in a state in which the engine has been started by the remote control engine starter.

Further, when the vehicle 1 stops at a traffic signal, the ignition switch 26 is not switched to the ACC OFF position or the IG OFF position. Thus, the multifunction receiver 16 does not switch to the key mode and is maintained in the tire pressure monitoring mode. This allows the multifunction receiver 16 to receive the tire pressure signal Stp when the vehicle 1 stops at a traffic signal.

The present embodiment has the advantages described below.
(1) The determination for switching the multifunction receiver 16 from the key mode for receiving signals from the wireless key system 3 to the tire pressure monitoring mode for receiving signals from the tire pressure monitoring system 9 is based on the power supply activation state of the vehicle 1 and the traveling state of the vehicle 1. The determination for switching the multifunction receiver 16 from the tire pressure monitoring mode to the key mode is based solely on the power supply activation state of the vehicle 1. Thus, when the vehicle 1 is in a parked state and the engine is started with a remote control engine starter, the multifunction receiver 16 is maintained in the key mode. When the vehicle 1 stops at a traffic signal, the multifunction receiver 16 is maintained in the tire pressure monitoring mode. In this manner, the signal reception mode of the multifunction receiver 16 is accurately switched.
(2) The traveling state of the vehicle 1 is determined based on the vehicle speed or the engine speed. Thus, the multifunction receiver 16 can accurately determine whether or not the vehicle 1 is traveling.
(3) The activation of the power supply of the vehicle 1 is determined based on the power supply information Sv output from the ignition switch 26. Thus, the multifunction receiver 16 can accurately determine whether or not the power supply of the vehicle 1 is activated.
(4) The wireless key system 3 and the tire pressure monitoring system 9 use radio waves (UHF) of the same frequency. Thus, the multifunction receiver 16 receives radio waves having the same frequency in both of the key mode and the tire pressure monitoring mode. This reduces the number and cost of components.
(5) In the multifunction receiver 16, the same ECU 17 is used to implement the key mode for receiving signals from the wireless key system 3 and the tire pressure monitoring mode for receiving signals from the tire pressure monitoring system 9. This effectively reduces the number and cost of components.

It should be apparent to those skilled in the art that the present invention may be embodied in many other specific forms without departing from the spirit or scope of the invention. Particularly, it should be understood that the present invention may be embodied in the following forms.

The electronic key system is not limited to the wireless key system 3. For example, the electronic key system may be a key-operation-free system that performs short range wireless communication (communication range of several meters) with the vehicle 1 for ID verification. Further, the vehicle 1 may include a key-operation-free system in addition to the wireless key system 3.

The determination for switching the multifunction receiver 16 from the key mode to the tire pressure monitoring mode does not have to be based on the power supply activation of the vehicle and the travel state of the vehicle. For example, when the vehicle 1 includes a key-operation-free system, the determination may be based on whether the system accomplishes vehicle interior verification.

Also, when the vehicle is in a parked state, the mode setting section 29 may set the multifunction receiver 16 to the key mode. Thereafter, when the power supply of the vehicle 1 is activated, and the vehicle speed is greater than or equal to a threshold, or the engine speed is greater than or equal to a threshold, the mode setting section 29 may switch the multifunction receiver 16 from the key mode to the tire pressure monitoring mode. Thereafter, when the power supply of the vehicle 1 is deactivated, the mode setting section 29 may switch the multifunction receiver 16 from the tire pressure monitoring mode to the key mode.

The travel state information Sk may be position information obtained by, for example, a global positioning system (GPS). In this case, the present position of the vehicle is recognized with the GPS, and the vehicle 1 is determined to be traveling when the position of the vehicle 1 changes.

The travel state information Sk may be obtained from a pedal depression amount signal generated by an accelerator pedal sensor that detects the depression amount of an accelerator pedal. Further, the travel state information Sk may be obtained from an acceleration signal generated by an acceleration sensor dedicated for the vehicle 1.

The power supply information Sv does not have to be obtained from the switch signal generated by the ignition switch 26. The power supply information Sv may be obtained from any other signal as long as activation of the power supply of the vehicle 1 can be checked.

A predetermined time lag may be provided when switching the multifunction receiver 16 from the tire pressure monitoring mode to the key mode. This further ensures that the multifunction receiver 16 obtains the tire pressure signal Stp.

When switching the signal reception mode of the multifunction receiver 16, the operational functions of the reception unit 18 (reception circuit 20) may also be changed.

The key actuator 22 and the tire pressure monitoring actuator 23 may be configured by separate hardware circuits.

The frequencies of the wireless signal Swl and the tire pressure signal Stp do not have to be the same and may differ from each other for a predetermined amount.

The wireless key system 3 is not limited to a system that locks and unlocks vehicle doors. For example, the wireless key system 3 may be a system that opens a closes a slide door or a back door.

The tire pressure monitoring system 9 does not have to be of a self-excited type that transmits radio waves from the tire communicators 10. The tire pressure monitoring system 9 may be of an initiator type that transmits the tire pressure signal Stp when receiving radio waves from an initiator attached to the vehicle body 7.

The present examples and embodiments are to be considered as illustrative and not restrictive, and the invention is not to be limited to the details given herein, but may be modified within the scope and equivalence of the appended claims.

A vehicle (1) includes a multifunction receiver (16) that receives signals from a wireless key system (3) and a tire pressure monitoring system (9). When a power supply of the vehicle (1) is activated and the vehicle (1) is traveling or stopped, the multifunction receiver (16) is set to receive signals from the tire pressure monitoring system (9). When the power supply of the vehicle (1) is deactivated, the multifunction receiver (16) is set to receive signals from the wireless key system (3) regardless of the travel state of the vehicle (1).

## Claims

1. A multifunction receiver shared by an electronic key system, which verifies authenticity of an electronic key of a vehicle, and a tire pressure monitoring system, which monitors air pressure of a tire of the vehicle, the multifunction receiver comprising:
a power supply state detection unit that detects whether or not a power supply of the vehicle is activated;
a travel state detection unit that detects whether or not the vehicle is traveling or stopping; and
a signal reception mode setting unit that sets a signal reception mode of the multifunction receiver to a tire pressure monitoring mode for receiving a signal from the tire pressure monitoring system and a key mode for receiving a signal from the electronic key system, wherein
the reception mode setting unit sets the multifunction receiver to the tire pressure monitoring mode when the power supply state detection unit detects that the power supply of the vehicle is activated and the travel state detection unit detects that the vehicle is traveling or stopping, and
the reception mode setting unit sets the multifunction receiver to the key mode when the power supply state detection unit detects that the power supply of the vehicle is deactivated.

2. The multifunction receiver according to claim 1, wherein
the electronic key system verifies the authenticity of the electronic key with an ID signal transmitted from the electronic key, and
the tire pressure monitoring system monitors the air pressure of the tire with a tire pressure signal transmitted from a tire pressure detection unit arranged in the tire.

3. The multifunction receiver according to claim 1 or 2, wherein
the travel state detection unit detects a travel state of the vehicle based on a vehicle speed or an engine speed and generates travel state information indicating the travel state of the vehicle, and
the reception mode setting unit determines whether or not the vehicle is traveling or stopping based on the travel state information.

4. The multifunction receiver according to any claim of claims 1-3, wherein
the vehicle includes an ignition switch,
the power supply state detection unit acquires power supply information from the ignition switch, and
the reception mode setting unit determines whether or not the power supply of the vehicle is activated based on the power supply information.

5. The multifunction receiver according to any claim of claims 1-4, wherein the tire pressure monitoring mode and the key mode receive signals having the same frequency.

6. The multifunction receiver according to any claim of claims 1-5, further comprising a control unit connected to the reception mode setting unit, wherein the control unit controls the reception mode setting unit to switch the signal reception mode of the multifunction receiver.

7. A method for operating a multifunction receiver shared by an electronic key system, which verifies authenticity of an electronic key of a vehicle, and a tire pressure monitoring system, which monitors air pressure of a tire of the vehicle, the method comprising:
detecting whether or not a power supply of the vehicle is activated;
detecting whether or not the vehicle is traveling or stopping;
setting the multifunction receiver to a mode for receiving a signal from the tire pressure monitoring system when detecting that the power supply of the vehicle is activated and the vehicle is traveling or stopping; and
setting the multifunction receiver to a mode for receiving a signal from the electronic key system when detecting that the power supply of the vehicle is deactivated.
